Europäisches Patentamt

European Patent Office

Office européen des brevets

(11) Publication number: **0 161 846**
A2

# (12) EUROPEAN PATENT APPLICATION

(21) Application number: **85302913.0**

(22) Date of filing: **25.04.85**

(51) Int. Cl.⁴: **F 24 F 11/00**, G 05 D 23/19

(30) Priority: **04.05.84 US 607167**

(43) Date of publication of application: **21.11.85**
Bulletin 85/47

(84) Designated Contracting States: **DE GB IT SE**

(71) Applicant: **Kysor Industrial Corporation, 1 Madison Avenue, Cadillac Michigan (US)**

(72) Inventor: **Carte, Delbert Lynn, 5175 Martins Crossing Road, Stone Mountain Georgia 30088 (US)**

(74) Representative: **Robinson, Anthony John Metcalf et al, Kilburn & Strode 30 John Street, London, WC1N 2DD (GB)**

(54) Environmental monitor and control.

(57) An environmental control system for a building has several cooling stages and a monitor which includes several test switches (13, 19) for testing the system as well as providing remote and local temperature readings (160). The system includes a dehumdification control in which a logic circuit (180) is coupled to detectors for each of the cooling stages as well as a humidistat (170), and in the event the humidistat provides an output signal indicating humidity has exceeded a predetermined level, the logic circuit provides an output signal for successively adding additional stages of cooling to reduce the humidity.

1.

# ENVIRONMENTAL MONITOR AND CONTROL

The present invention relates to a control system for a building with a multiple stage heating and cooling system, and particularly to improved dehumidifying control circuits and test circuits therefor.

In large buildings, such as supermarkets, employing refrigerated display cases, the heat generated by the compressors for the refrigerated display cases is recovered. In addition, the heating system typically includes several electrical heat exchangers for providing additional heat for the building as required. Additionally, such installations typically include two or more cooling condensors and associated evaporators for providing air conditioning for the building.

Conventionally, humidity has been controlled by a humidistat which actuates a manually-selected cooling stage. In such prior installations, if the temperature controller indicates that a single cooling stage is satisfying the temperature conditions for the air conditioning, the operation of the humidistat will not, in many cases, reduce the humidity to an acceptable level, and a second stage of cooling must be manually actuated to achieve dehumidification. Further, in prior installations, although many automatic controlling features, such as night set back and dead band temperature range selection is available, no known prior art systems provide an integrated control and test system whereby all of the desirable controlling and testing functions are provided at a single control and monitor panel.

The system of the present invention provides a unique dehumidification control in which a circuit is coupled to detect the operation of each of the cooling stages as well as a humidistat. In the event the humidistat provides an output signal indicating humidity has exceeded a predetermined level, the circuit provides a signal for successively adding additional stages of cooling to reduce the humidity.

According to a first aspect of the invention an environmental control system for a building including a multiple stage heating and cooling system with a control therefor and a dehumidification system, is characterised by humidity detection means for detecting the humidity of the ambient air in the building and providing a humidity control signal indicating when the humidity is above a predetermined level; means for providing signals representing the operational states of each stage of cooling; and circuit means coupled to the humidity detection means and the providing means for providing successive output control signals for

3.

application to the cooling system control for adding a next stage of cooling when the humidity detection means provides the humidity control signal indicating humidity above a predetermined level.

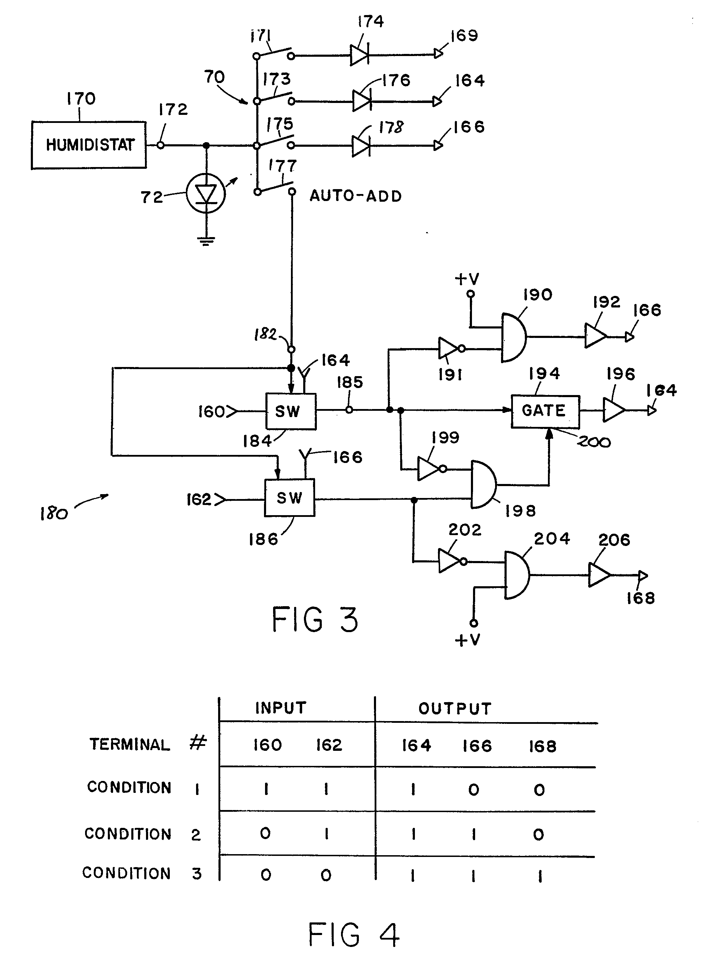

. Preferably the circuit means comprises a logic circuit for providing output signals in response to input signals for one or more of the conditions shown in Figure 4 or the negative logic equivalent thereof. The system may also include a temperature detector and a coupled digital temperature display for indicating the sensed temperature. It may also include a second temperature detector and means for selectively coupling the detectors to the digital display.

According to a second aspect of the invention an environmental control system for a building including a multiple stage heating and cooling system having a control circuit therefor is characterised by a plurality of output or input terminals associated with the control for coupling control or status signals from or to the control to or from a plurality of heating and cooling elements, and test jack means having a test terminal coupled in parallel with at least one of the terminals for coupling test equipment to the system.

According to a third aspect of the invention an environmental control system for a building including a multiple stage heating and cooling system having a control circuit therefor is characterised by means for providing one of a heating or cooling reference signal, and to means for selectively coupling the reference signal to the heating and cooling control for testing the operation of the system.

According to a fourth aspect of the invention an environmental control system for a building including a multiple stage heating and cooling system having a control circuit therefor is characterised by means for sensing the temperature of a building in which the control is employed; second means for sensing the temperature at a remote location; and circuit means for selectively coupling the first or second temperature sensing means to a digital display for providing an indication of the temperature sensed by the first or second sensor means. The remote sensor may be positioned externally of the building in which the system is installed.

According to a fifth aspect of the invention a humidity control circuit for use in a temperature and humidity control system including a humidistat and at least two successively operable humidity-controlling

5.

elements, is characterised by means for detecting the operational status of each successively-operable humidity controlling element, and circuit means coupled to the humidistat and to the detecting means for actuating the next humidity-controlling element which is not operating upon receipt of a signal from the humidistat.

According to an optional aspect of the present invention, an environmental control and monitor is provided in which all of the controls and monitor functions are provided at a single location. A control panel is provided which includes several test switches for testing the sytem as well as providing remote and local temperature readings.

According to other optional aspects of the present invention, remote temperature sensor can be provided external to the building for testing outside temperature for use in balancing the system. Further, calibrated resistors for predetermined temperature levels for the heating and cooling systems are provided and can be momentarily coupled in the control circuit for testing the operation of the system and monitoring the operation at the central location.

The invention may be carried into practice in various ways and one particular

6.

embodiment will now be described by way of example, with reference to the accompanying drawings, in which:

Figure 1 is a front elevational view of a control and monitor panel embodying the present invention;

Figure 2 is an electrical circuit diagram in block and schematic form of a part of the control system embodying the present invention;

Figure 3 is an electrical circuit diagram in block and schematic form of the humidifying control circuit; and

Figure 4 is a truth table illustrating the operation of the circuit shown in Figure 3.

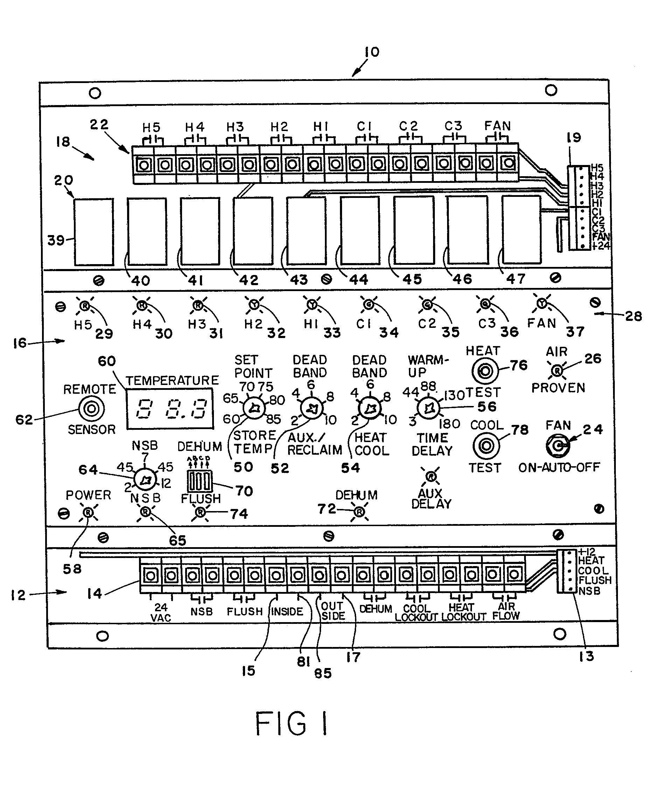

Referring initially to Figure 1, there is shown a three-section control panel 10 which is adapted to be centrally mounted in an installation for use by maintenance and supervisory personnel for the control of the heating and air conditioning system for a relatively large building, such as a supermarket. The system 10 includes an input panel 12 with an input terminal strip 14 for coupling input control signals from a variety of sensors and switch contacts illustrated schematically below the terminal strip 14. The panel 10 also includes a centrally-located monitor and control section 16 and an output section 18 including a bank 20 of control relays 39-47 and an output terminal strip 22 for coupling of the control and monitor panel 10 to the various operational units, such as heaters, compressors, damper valves, and the fan for the heating and cooling system.

The panel 12 includes a first test jack 13 coupled to selected terminals of the input terminal 14 for monitoring such input information for testing or remote monitoring, if desired. The panel 18 also includes a test jack 19 with terminals coupled in parallel with terminals of the strip 22 for providing test monitoring of the status of the relay contacts associated with the relay bank 20 as well as the fan and the control voltage for the system. Test equipment can, therefore, be plugged directly into the jacks 13 and 19 for testing, trouble-shooting and/or monitor system operation.

The control panel includes a main on/off and automatic switch 24 for controlling the fan and an air flow indicator light 26 coupled to the air flow sensor input of the terminal strip 14 for providing a visual indication of the existence of air flow. A row 28 of LEDs 29-37 indicate the status of the five heating stages $H_1$-$H_5$, the three

cooling stages $C_1$-$C_3$ and the fan. The associated control relays 39-37 are positioned directly above the status LEDs. The control panel 16 includes a temperature adjustment control 50 as well as two dead band controls 52 and 54 for controlling the dead band zones at which the heating/cooling system will not be activated when in a desirable temperature range not requiring additional heating or cooling, as is conventional.

The panel 16 also includes a time dealy control 56 for the heating cycle and a general power-indicating light 58 (at the lower lefthand corner) indicating that power is applied. The panel also includes a digital temperature display 60 for use in connection with either the inside temperature information applied to terminals 81 and 15 of the terminal strip 14 or selective outside or remote temperature sensor coupled to the terminals 85 and 17 of the terminal strip 14. A momentary, push-button switch 62 will automatically disconnect the normally-connected inside temperature monitoring sensor and couple the outside sensor to the temerature control and the display 60 such that the operator can momentarily determine the outside temperature by pressing the switch 62. A night setback time control 64 and associated operational light 65 is included also on the front panel. The system further includes a dehumidification control switch 70 including four switches, the operation of which is described in detail below in connection with Figures 3 and 4. During dehumidification, a dehumidification indicator light 72 is activated.

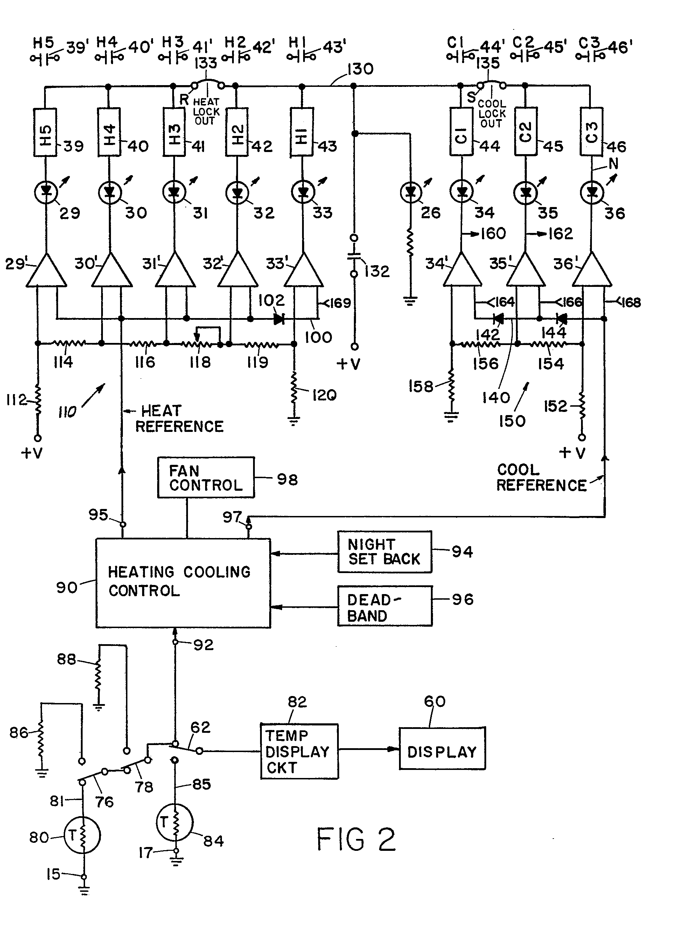

The control system also includes an indicator light 74 indicating the flush mode of operation for the system and a push-button switch 76 for inserting a calibration resistor of predetermined value for testing the heating system where a temperature of $50^O$F ($10^O$C) is employed to test the operational status of the control system. A momentary push-button cool test switch 78 inserts a calibration resistor corresponding to a temperature of $100^O$F ($37.8^O$C) in the system to determine the operational status of the cooling portion of the system, as will be described in greater detail below in connecton with Figure 2. Having described the overall system control panel, the additional unique features of the system are described below in connection with the remaining Figures.

Turning now to Figure 2, the control and monitor system employs, as a basic sensor,

10.

an indoor temperature sensor 80 which comprises
a thermistor, in the preferred embodiment,
located at a temperature-representative area
in a building, typically remote from the control
panel 10. The thermistor 80 has one terminal
15 grounded and the output terminal 81
coupled to a normally closed single pole
double throw (SPDT) switch 76 corresponding
to the heat teast switch. The switch 76
is serially coupled to a second normally
closed SPDT switch 78 corresponding to
the cooling switch which, in turn, is
serially coupled to the third normally closed
SPDT remote sensor switch 62. The output
of the switch 62 is coupled to the input
of a temperature display circuit 82 which
is of conventional design and converts the
varying resistance provided by the thermistor
80 into a digital format signal which is
applied to the digital display 60 which can
be an LCD-type display or other digital
format. The circuit 82 is conventional
and includes a calibration adjustment for
the thermistor to assure accuracy. The
signal from the thermistor 80 is also
applied through the input contact of the
switch 62 to the heating and cooling control
circuit 90 to provide temperature information
to the control system in addition to providing
a continuous digital display of such
information.

If it is desired to monitor the outside or other remote temperature, a second thermistor 84 is provided and has one terminal 17 grounded and the second terminal 85 coupled to the remaining switching terminal of the switch 62 such that when the momentary push-button switch 62 is actuated, the display 60 will display the outside temperature to the operator without disturbing the inside input temperature information to the control circuit 90.

In order to test the operational status of the heating and cooling system, switches 76 and 78 are provided with the switch 76 providing a test for the heating section. The actuation of the momentary push-button switch 76 decouples the thermistor 80 from the input terminal 92 of the circuit 90 and inserts, in its place, a resistance 86 having a value corresponding to a temperature of $50^{\circ}F$ ($10^{\circ}C$), which resistance is the same as that the thermistor 80 would provide at a $50^{\circ}F$ ($10^{\circ}C$) inside-building temperature. Thus, in effect, the insertion of a known resistance simulates an ambient temperature of $50^{\circ}F$ ($10^{\circ}C$) insofar as the input signal to the control circuit 90 is concerned. Thus, regardless of the actual indoor temperature, the control will respond as if it were sensing a $50^{\circ}F$ ($10^{\circ}C$) temperature,

12.

and therefore activate the various heating stages, indicating to the operator the operational status of the heating systems by monitoring the display LEDs 29-33.

Similarly, the momentary, push-button switch 78 can be actuated to decouple the thermistor 80 from the input terminal 92 of the control 90 and insert in its place a fixed resistance 88 having a resistance value selected to provide an apparent temperature of $100^{O}F$ ($37.8^{O}C$) such that the heating and cooling control will respond as if the ambient building temperature was $100^{O}F$ ($37.8^{O}C$) and activate the cooling system including the three compressors. Proper activation of the system will be indicated by the display lights 35, 36 and 37 on the panel 16. Thus, the test switches 62, 76 and 78 provide information to the maintenance and supervisory personnel as to the operational status of the entire heating and cooling system by the utilization of conveniently located momentary, push-button switches as well as provide outside temperature information for reference.

The heating/cooling control circuit 90 is integrally coupled with a night setback circuit 94 including the control 64 (Figure 1) and a time-clock actuated switch. Similarly, the control 90 is integrally

13.

coupled to a dead band control circuit 96
which includes the adjustment controls 52
and 54 for varying the temperature range
for the dead band.  The circuits 90, 94,
96 and their associated controls are
substantially conventional, and they are
shown only schematically for purposes of
simplification.  Basically, the circuits
comprise a voltage dividing network and
variable resistance with operational
amplifiers to receive the temperature input
information at the input 92 and from the
temperature select control 50 to provide
a pair of DC varying signals at output
terminals 95 and 97 which serve as a heat
control signal and a cooling control signal,
respectively.  The circuit 90 is also
coupled to a conventional fan control
circuit 98 which includes a fan control
relay 47 (shown in Figure 1), the fan
status LED 37 associated therewith and the
fan on/automatic/off switch 24.  The fan
control 98 also includes suitable
interconnections with the night setback
and the heating and cooling control 90
to provide fan operation.

The heating control output signal
and the terminal 95 is a varying DC signal
and is applied to a conductor 100 commonly
coupled to a signal input terminal of each of a plurality of operational amplifiers 29'-33'
coupled to and associated with controlling
relays 29-33, respectively, as shown in the
Figure. The remaining reference signal
input terminals of each of the operational
amplifiers 29'-33' are coupled to a voltage
dividing network 110 including a first
resistor 112 having one terminal coupled to
a +V supply and the remaining terminal coupled
to a reference input terminal of the
operational amplifier 29' and to a second
resistor 114. The output terminal of resistor
114, in turn, is coupled to a reference
input terminal of the operational amplifier
30' and its remaining terminal coupled to
a third resistor 116 of the network. The
remaining terminal of the resistor 116 is
coupled to the reference input terminal
of the operational amplifier 31' while
its output terminal is coupled to one
terminal of a rheostat 118 having its output
terminal coupled to a reference input
terminal of the operational amplifier 32'
and also to one terminal of a fifth
resistor 119. The remaining terminal of
the resistor 119 is coupled to a reference
input terminal of the operational amplifiers
33' and its remaining terminal coupled to
a final resistor 120 which has its remote
terminal coupled to ground. The network 110 thereby provides a reference DC level at each of the reference input terminals of the operational amplifiers corresponding to predetermined temperatures. The amplifiers receive, at their remaining input terminals, a temperature controlling signal the value of which is directly related to the differntial between the sensed temperature and the desired temperature.

The heating stage $H_1$ and $H_2$ are controlled by the relays 43 and 42, respectively, and comprise a reclaim heat portion of the heating system whereby heat from compressors for the refrigerated display cases recirculates through the furnace ductwork. The rheostat 118 allows adjustments of the temperature at which the remaining heat stages $H_3$-$H_5$ comprising electrical heating systems are to be enacted. By adjusting the rheostat 118, therefore, the electrical heat system can be activated only when the sensed temperature reaches, for example, $60^{\circ}F$ ($15.6^{\circ}C$) thereby providing an extremely efficient system in which the reclaimed heat is used as a primary heat source whenever possible. Adjustment of the rheostat 118, therefore, allows this temperature to be selected.

The outputs of each of the operational amplifiers 29'-33' are coupled to the cathodes of the diodes 29-33, respectively, having their anodes coupled to the control coils of the relays 39-43, respectively. The outputs of the relay coils are, in turn, coupled to a common +V volt supply-bus 130 which is supplied by a +V volt supply through an air-proven contact-closure 132 which also actuates the air-proven diode 26 having its cathode coupled to ground and its anode coupled to the contacts 132. Thus, only when there is air flow in the system, as indicated by closure of the contacts 132, will any of the heating or cooling relays commonly coupled to the bus 130 be actuated. This prevents the heating/cooling system from operating in the event the fan is not operational. A conventional heat lockout interface 133 set for $30^{\circ}F$ $(-1.1^{0}C)$ opens the power supply line to the control relays 39-41 in the event the outside temperature is greater than $30^{\circ}F$ $(-1.1^{\circ}C)$ thereby allowing utilization of only the heat recovery stages $H_1$ and $H_2$ during such realtively temperate ambient conditions. The relay control coils 39-43 each have associated contacts 39'-43', respectively, which provide normal control functions for the electrical heat systems $H_3-H_5$ or dampers for routing the reclaimed heat in stages $H_1$ and $H_2$.

The cooling control signal at output terminal 97 of the circuit 90 is similarly applied to a conductor 140 which is commonly coupled through steering diodes 142 and 144 to signal input terminals of operational amplifiers 34'-36' which have their remaining reference voltage input terminals coupled to a voltage dividing network 150. The purpose of the diodes will be explained later. The network 150 has an input resistor 152 with one terminal coupled to the +V volt supply and a remaining terminal coupled to a reference input terminal of the amplifier 36' and to one terminal of a second resistor 154. The resistor 154 has its remaining terminal coupled to a reference input terminal of the operational amplifier 35' and to an input terminal of a third resistor 156. The resistor 156 has its remaining terminal coupled to a reference input terminal of operational amplifier 34' and its remaining terminal coupled to a final resistor 158 having its remaining terminal coupled to ground to complete the voltage dividing network 150. The output terminals of each of the operational amplifiers 34'-36' are coupled to the cathodes of LEDs 34-36 with their anodes coupled to the actuating coils of control relays 44,46, respectively. The remaining terminals of the relay coils

18.

are coupled to the bus 130 with a cool lockout switch 135 inserted between the first and second cooling stages, as illustrated. The switch 135 is set at $60^{\circ}F$ ($15.6^{\circ}C$) such that in the event that the outside temperature is below $60^{\circ}F$ ($15.6^{\circ}C$) the second and third stages of cooling will not be operational with the first stage being available for dehumidification. The relays 44-46 each include controlled contacts 44'-46' for operating the condensors associated with the conventional cooling equipment.

With both the heating and cooling control operational amplifiers, whenever the signal input on the conductors 100 or 140 exceeds the reference voltage on any one or more of the operational amplifiers, the output of the operational amplifier will go to ground potential allowing current to conduct through the control relay coils and the associated LED both actuating the associated heating or cooling unit being controlled as well as providing a visual indication on the panel 16 of such operation. The circuit shown in Figure 2 additionally includes signal input and output terminals for interfacing with the dehumidification circuit shown in Figure 3. The status of operation of cooling system $C_1$ is provided by detecting signals at an output terminal 160 coupled to the output of the operational amplifier 34' providing a "0" logic level signal when the first cooling stage is on and a "1" logic signal when off. A second output terminal 162 is coupled to the output of operational amplifier 35' and similarly provides a logic "0" signal when the second cooling stage is on, and a "1" when off.

The first cooling stage can be operated independently of the cool control signal from the output terminal 97 of the heating and cooling control 90 by the dehumdification circuit 180, shown in Figure 3, by signals applied to an input terminal 164 of the first stage of cooling which is coupled to the signal input terminal of the operational amplifier 34'. Similarly, the second cooling stage $C_2$ can be operated independently of the signal from output terminal 97 by an input terminal 166 directly coupled to the signal input terminal of the operational amplifier 35' as can be the third cooling stage $C_3$ by an input signal applied to a similar input terminal 168. The blocking diodes 142 and 144 serially coupled in the interconnection of the operational amplifiers as shown will prevent a signal applied to the input 164 from actuating the second and third cooling stages and, therefore, affecting only the first cooling stage while allowing normal operation of the system by signals from the terminal 97. Similarly, the blocking diode 144 prevents a signal applied on the terminal 166 from actuating the third cooling stage. If the second cooling stage is operational, the first cooling stage will also be operational such that the signal on the input terminal 166 will not adversely affect the first cooling stage.

The first heating stage $H_1$ also can be independently controlled by an input signal on a terminal 169 with a blocking diode 102 coupled between the operational amplifiers 32' and 33', as shown in Figure 2, preventing the input signal from affecting the remaining heating stages.

Having described the interconnection of the various heating and cooling sections, a description of the dehumidification control system which manually can control the $H_1$, $C_1$ or $C_2$ stages or automatically add additional stages of cooling, if necessary, for dehumidification is described in connection with Figures 3 and 4. Typically, addition of one stage of cooling over that required for any temperature controlling function will control the humidity. Referring initially to Figure 3, the system includes a humidistat 170 which provides an output signal which can be a logic "1" signal at its output terminal 172 in the event the relative humidity exceeds, for example, 55%. This signal is used to actuate the humidifier LED 72 (see also Figure 1). The output signal is applied to a common conductor coupled to four input terminals of single-pole single-throw switches 171, 173, 175 and 177 associated with the switch 70 on the panel 16 for controlling dehumidification. Actuation of the switch 171 will manually apply the humidistat control signal through a steering diode 174 to a terminal intercoupled with the terminal 169 (shown in Figure 2), for activating the first heating stage if the humidity is high under relatively low temperature conditions. Similarly, the manual switch 173 can be actuated to provide the control signal through a steering diode 176 to a terminal intercoupled with the terminal 164 (shown in Figure 2) for manually actuating the first cooling stage for removing humidity when temperature conditions are somewhat higher. If desired, the switch 175 can be manually actuated to control the additional cooling stage $C_2$ by applying a signal from the humidity control signal through a steering diode 178 to an output terminal coupled to the terminal 166 in Figure 2 for adding an additional cooling stage for controlling humidity under higher temperature conditions. Finally, the automatic add control for automatically controlling humidity including the automatic humidity control logic circuit (dehumidification circuit) 180 can be activated by closing the switch 177 which couples the humidistat control signal an input terminal 182 of the circuit 180.

The circuit 180 receives the humidistat control signal as well as the operational status signals for the first and second cooling stages from the terminals 160 and 160 (also shown in Figure 2). Depending upon the detected operational states of these cooling stages, the circuit 180 will, upon receipt of a humidity control signal, successively add additional stages of cooling as required for decreasing the humidity of the building below the predetermined threshold.

The input terminal 160 of the circuit 180 is coupled to an input of a solid state switch 184 which is controlled (by a signal from the terminal 182) to apply a signal from the input terminal 160 to its output terminal 185 upon receipt of a humidity control signal. Similarly, the signal at the input terminal 182 is also coupled to a second solid state switch 186 for controlling the switch to couple signals from the input terminal 162 through the switch. Thus, only when a humidity control signal is applied to the switches 184 and 186, will signals from the inputs terminals 160 and 162 be applied to the logic circuit contained within the automatic humidifying circuit 180. The output terminal 185 of the switch 184 is coupled to one input terminal of an AND gate 190 through an inverter 192, with the remaining input terminal of the AND gate 190 coupled to the +V volt supply (logic "1'). The output of the AND gate 190 is coupled to the terminal 166 through a noninverting isolation amplifier 192. The output terminal 185 of the switch 194 also couples the signal on the terminal 160 to an input terminal of a controlled gate 194 which when actuated applies the output signal through a noninverting amplifier 196 to the output terminal 164. Finally, the output terminal 185 is also coupled to an input terminal of a second AND gate 198 through an inverter 199 with the output of the AND gate 198 providing a control input signal at a terminal 200 of the gate 194. Thus, the gate 194 will pass the signal from the terminal 185 to the output terminal 164 only when enabled by an output signal from the AND gate 198.

The second input terminal 162 of the circuit 180 is coupled through the switch 186 to the remaining terminal of the AND gate 198 and to a third AND gate 204 through an inverter 202. The gate 204 has its remaining input terminal coupled to the +V volt supply. The output terminal of the AND gate 204 is coupled through a noninverting amplifier 206 to the output terminal 168. The logic circuits, including the AND gates, inverters, control gates and solid state switches are of conventional design and may be incorporated in one or more integrated circuit chips and are supplied with operating power and referenced to ground in a conventional manner not illustrated in the Figure. Naturally, depending on the logic polarity of detected status signals and the output signals needed, the circuit can be designed to operate with signals of opposite logic polarity (i.e., "1" and "0" reversed). The operation of the dehumidifier and circuit 180 can best be understood with reference to Figure 4 and the operational description which now follows.

Figure 4 is a truth table showing the input versus the resultant output signals for different conditions of operation of the circuit 180. Assuming, initially a condition 1 in which neither of the cooling

stages $C_1$ or $C_2$ are operational and, therefore, the signals at terminals 160 and 162 (shown in Figures 2 and 3), are at a logic "1" level. When the humidistat provides a signal at output terminal 172 calling for humidity control and switch 177 is in the automatic position (closed, as illustrated in Figure 3) the result of the receipt of the humidifying control signal at the input terminal 182 of the circuit 180 is to cause the terminal 164 to go to a logic level "1". This as may be seen from Figure 2 activates the first cooling stage. The output of the terminals 166 and 168 remaining at logic low levels and the second and third cooling stages are thus not activated. The signal at the terminal 164 is also coupled back to the switch 184 (as may be seen from Figure 3) to turn it off until such time as the next humidity control signal is received. This latching function prevents the logic circuit from automatically cycling through conditions 1-3.

If condition 2 exists, as represented by the second horizontal line of the truth table of Figure 4, the first cooling stage is already in operation and is not able to maintain humidity below a predetermined setting. Thus, the humidistat provides a control signal and with input terminal now at a logic level "0", inasmuch as the first cooling stage is operational, the combination of "0" and "1" on the input terminals 160 and 162 cause the output terminal 166 to go to a logic level "1" which, in turn, activates the second cooling stage $C_2$, while the third cooling stage remains inactive.

In the event that the first and second cooling stages are activated, as indicated by logic "0"s at the input terminals 160 and 162, as illustrated as condition 3 in Figure 4, logic "0" levels applied to the input terminals 160 and 162 result in the output terminals 164, 166 and 168 going to a logic "1" level. The output terminal 166 of the circuit 180 is coupled back to the switch 186 such that once the additional cooling stage has been added, the now changed input signal is isolated from the circuit 180 to prevent the change of state of the operation of the cooling system signal at input terminals 160 and 162 from automatically causing the circuit to cycle through the three different conditions.

The hardwired logic circuit 180, shown in Figure 3, is one method of achieving the control functions illustrated by the truth table in Figure 4, it being understood that a microprocessor control or other

27.

specific form of a logic circuit may be
employed to achieve the desired control
signals.

The circuit 180 may be employed with
only two stages of cooling or supplemented
if a fourth stage is added.  The switch
70 may have one or more contacts manually
closed and the circuit 180 will still,
if coupled to the switch 177, respond
to the humidity control signal to add
at least one stage of cooling as discussed.

0161846

28.

CLAIMS

1. An environmental control system for a building including a multiple stage heating and cooling system with a control (90) therefor and a dehumidification system, characterised by humidity detection means (170) for detecting the humidity of the ambient air in the building and providing a humidity control signal indicating when the humidity is above a predetermined level; means for providing signals representing the operational states of each stage of cooling; and circuit means (180) coupled t o the humidity detection means (170) and the providing means for providing successive output control signals for application to the cooling system control for adding a next stage of cooling when the humidity detection means (170) provides the humidity control signal indicating humidity above a predetermined level.

2. A system as claimed in Claim 1 for use with a three stage cooling system and wherein the circuit means provides an output control signal in response to the humidity control signal for activating a second stage (45) of cooling in the event a first stage (44) is operating and for activating a third (46) stage of cooling in the event the first (44) and second (45) stages of cooling are operating.

0161846

29.

3. A system as claimed in Claim 1 or Claim 2 including means (86) for providing a heating reference signal, and means (76) for selectively coupling the heating reference signal to the heating and cooling control (90) for testing the heating operation of the system.

4. A system as claimed in any one of Claim 1 to 3 including means (88) for providing a cooling reference signal and means (78) for selectively coupling the cooling reference signal to the heating and cooling control (90) for testing the cooling operation of the system.

5. A system as claimed in any one of the preceding claims in which the heating and cooling control (90) includes a plurality of output terminals for application of the output control signals to elements to be controlled and further including at least one test jack having test terminals coupled in parallel with the output terminals for coupling testing equipment to the system.

6. An environmental control system for a building including a multiple stage heating and cooling system having a control circuit therefore characterised by a plurality

0161846

30.

of output or input terminals associated with the control (90) for coupling control or status signals from or to the control to or from a plurality of heating and cooling elements, and test jack means (13, 19) having a test terminal coupled in parallel with at least one of the terminals for coupling test equipment to the system.

7. A system as claimed in Claim 7 in which the test jack includes a plurality of test terminals each uniquely coupled in parallel with a plurality of output or input terminals of the control.

8. A system as claimed in Claim 7 in which the control (90) includes an input terminal strip (14) (comprising the plurality of input terminals) and an output terminal strip (22) (comprising the plurality of output terminals) and a pair of test jacks with a first jack (13) having test terminals coupled to the input terminals of said input strip and a second jack (19) having test terminals coupled to the output terminals of the output strip.

9. An environmental control system for a building including a multiple stage heating and cooling system having a control

0161846

31.

circuit (90) therefor characterised by means (86, 88) for providing one of a heating or cooling reference signal, and means (76; 78) for selectively coupling the reference signal to the heating and cooling control for testing the operation of the system.

10. A system as claimed in Claim 9 and including means (88; 86) for providing the other of the heating or cooling reference signal, and second means (78; 76) for selectively coupling the said other signal to the heating and cooling control (90) for testing the operation status of the system.

11. An environmental control system for a building including a multiple stage heating and cooling system having a control circuit (90) therefor characterised by means for sensing the temperature of a building in which the control is employed; second means for sensing the temperature at a remote location; and circuit means for selectively coupling the first or second temperature sensing means to a digital display for providing an indication of the temperature sensed by the first or second sensor means.

12. A humidity control circuit for use in a temperature and humidity control system

32.

including a humidistat and at least two successively operable humidity-controlling elements, characterised by means for detecting the operational status of each successively-operable humidity controlling elements and circuit means coupled to the humidistat and to the detecting means for actuating the next humidity-controlling element which is not operating upon receipt of a signal from the humidistat.

0161846

1/3

FIG 1

FIG 2

0161846

FIG 3

| TERMINAL | # | INPUT | | OUTPUT | | |
|---|---|---|---|---|---|---|
| | | 160 | 162 | 164 | 166 | 168 |
| CONDITION | 1 | 1 | 1 | 1 | 0 | 0 |
| CONDITION | 2 | 0 | 1 | 1 | 1 | 0 |
| CONDITION | 3 | 0 | 0 | 1 | 1 | 1 |

FIG 4